# EUROPEAN PATENT APPLICATION

(11) **EP 4 814 497 A1**
(43) Date of publication of application: **30.09.2026**
(21) Application number: 24941253.7
(22) Date of filing: 11.07.2024
(51) Int. Cl.: G01P 21/02, G06F 30/20, G06F 17/10, G06F 113/08, G06F 111/04

(54) **WIND FIELD CORRECTION METHOD AND SYSTEM APPLIED TO SINGLE-STATION REMOTE SENSING DEVICE**

(30) Priority: 30.05.2024 CN 202410689541
(71) Applicant: Nanjing Movelaser Co., Ltd., Nanjing, Jiangsu 210000 (CN)
(72) Inventor: LIU, Zhixin, Nanjing, Jiangsu 210000 (CN); WU, Haizhou, Nanjing, Jiangsu 210000 (CN); ZHU, Hailong, Nanjing, Jiangsu 210000 (CN); ZHOU, Jun, Nanjing, Jiangsu 210000 (CN)
(74) Representative: Laine IP Oy
(86) International application number: PCT/CN2024/104963
(87) International publication number: WO 2025/245973

(57) **Abstract**

Disclosed in the present invention are a wind field correction method and system applied to a single-station remote sensing device. The method comprises the following specific steps: S1, acquiring wind field data by means of a data information acquisition apparatus, and obtaining radial wind speed information of a current acquisition point by means of a data processing module; S2, on the basis of the hypothesis of an uniform wind field, using a classical wind speed reconstruction algorithm for inversion to obtain a three-dimensional wind speed vector of the acquisition point; S3, establishing an error model; and S4, on the basis of an error factor β calculated by means of the error model, performing data correction on the three-dimensional wind speed vector of the acquisition point obtained by means of inversion in S2. Compared with the prior art, the present invention provides a high-precision correction method, which can be operated on low-end hardware, and can also be directly installed and operated on hardware of a measurement device, so that measurement results can be corrected in real time, no additional complexity can be brought to users, and costs are reduced; and the present invention is suitable for solving complex system problems when accurate boundary conditions cannot be obtained.

## Description

### TECHNICAL FIELD

The present disclosure relates to field of wind field correction, and in particular, to a wind field correction method and system applied to a single-station remote sensing device.

### BACKGROUND

A single-station remote sensing device (RSD) transmits a plurality of beams of signals into space, where the signals interact with aerosol particles in the atmosphere. A portion of a backscattered signal is received by a receiving system of the remote sensing device and processed, which allows to extract partial wind velocity information represented by the atmospheric aerosol particles. Due to Doppler effect, a particle motion component along a signal transmission-reception direction causes a frequency shift in the scattered signal. Therefore, a wind velocity from analysis is only a projection component of a wind vector along a signal radial direction. To evaluate a complete three-dimensional wind velocity vector, radial wind velocity information from at least three different viewing directions has to be provided.

For a single-station remote sensing measurement device, since all signals are transmitted from a same base point, respective signals in different directions will be transmitted to different locations in space. A basic assumption of all single-station remote sensing devices in wind field inversion is that at a given distance from the point of transmission, a measured wind field at each viewing direction location is the same. Based on this assumption, using a geometric relationship among projections of a same vector along different directions, a system equation including at least three unknown quantities may be generated, thereby deriving the three-dimensional wind velocity vector by inversion using measured radial velocities. As shown in the following equation, using measured radial wind velocities *V_{Los}* and corresponding projection angles *θ* and *ϕ*, the three-dimensional wind velocity vector (*u*, *v*, *w*) may be derived by inversion:
$\left[\begin{matrix}{V}_{Los 1} \\ {V}_{Los 2} \\ {V}_{Los 3}\end{matrix}\right] = \left[\begin{matrix}sin {θ}_{1} cos {ϕ}_{1} & cos {θ}_{1} cos {ϕ}_{1} & sin {ϕ}_{1} \\ sin {θ}_{2} cos {ϕ}_{2} & cos {θ}_{2} cos {ϕ}_{2} & sin {ϕ}_{2} \\ sin {θ}_{3} cos {ϕ}_{3} & cos {θ}_{3} cos {ϕ}_{3} & sin {ϕ}_{3}\end{matrix}\right] ∗ \left[\begin{matrix}u \\ ν \\ w\end{matrix}\right] .$

To use this wind field inversion method, it has to be assumed that a wind field including radial wind velocities measured in a plurality of directions is fairly uniform. This is also a prerequisite for ensuring the accuracy of a wind field inversion result obtained by this method.

A method for obtaining wind velocities through a single-station remote sensing measurement device and performing wind field inversion requires an assumption that a wind field including radial wind velocities measured in a plurality of directions is fairly uniform. This is also a prerequisite for ensuring the accuracy of a wind field inversion result obtained by this method.

The uniformity assumption for wind field reconstruction is valid in a simple site with flat terrain and a wind field following an atmospheric boundary layer theory. However, when there is airflow nonuniformity from one direction to another, wind velocity reconstruction will be flawed and will introduce some additional measurement error. This often occurs to a complex terrain of a ground with a clear obstacle or a mountainous area, bringing an average error typically between 5% and 10% in the wind velocity. The measurement error severely hinder the application of a single-station remote sensing measurement device for wind velocity measurement in a complex terrain.

In related art, a measurement error caused by a complex terrain is generally quantified and corrected using models. These models typically rely on techniques for simulating a physical model of a wind field region measured by a remote sensing device. The most common one in the industry utilizes Reynolds-averaged Navier-Stokes (RANS) equations under a computational fluid simulation model, combined with boundary conditions introduced by an atmospheric boundary layer (ABL) model, and considers some relevant factors driving the flow of the wind field, as follows:
1. variation in terrain relief, that is, terrain complexity;
2. terrain coverage, including vegetation coverage, ground roughness, etc.;
3. atmospheric stability, such as wind field thermal effects driven by diurnal cycles and cycle of seasons.

In the aforementioned solution employing a conventional pure physical fluid simulation model, system simulation computation is performed by performing theoretical estimation on a wind velocity profile at a boundary inlet based on terrain coverage defined for the simulation, then using the estimated wind velocity profile as a predefined boundary condition for further simulation computation. However, there is a certain difference between the estimated wind velocity profile and the actual wind velocity profile, leading to a decrease in the accuracy of data correction.

Furthermore, a fluid simulation model (such as RANS) widely used nowadays requires a significant computational cost and time to obtain an ideal computational result. In addition to the cost issue, the demand for external computational time and energy consumption also makes it difficult for a remote sensing measurement device to complete complex fluid simulation on its own. Having obtained data acquired by the remote sensing device, a user has to outsource professional data post-processing to complete the aforementioned wind velocity correction. This not only increases a test project period but also degrades the user experience during wind velocity measurement.

Another drawback of the aforementioned solution is that in evaluating a simulated radial velocity at a given measurement height based on simulation results, single-point sampling is performed directly on the wind velocity in the simulated wind field at a corresponding distance along the radial direction. However, in actual measurement, the radial velocity is obtained by processing backscattered signals from atmospheric aerosol particles of a certain volume (also referred to as a probe volume) by a remote sensing measurement device. The shape and extent of this probe volume depend on how fast a signal propagates, a duration of signal reception, and characteristics of a transmitter system. The single-point sampling method used in the prior solution differs from the actual measurement process, directly reducing the accuracy of wind velocity correction.

### SUMMARY

In view of the shortcomings of the two models, i.e., that for an existing conventional pure physical fluid simulation model, there is a certain difference between the estimated wind velocity profile and the actual wind velocity profile, leading to a decrease in the accuracy of data correction; and that a fluid simulation model (such as RANS) widely used nowadays requires a significant computational cost and time to obtain an ideal computational result, which not only increases a test project period but also degrades the user experience during wind velocity measurement, the present disclosure proposes a wind field correction method and system applied to a single-station remote sensing device.

To achieve the above objective, the present disclosure employs technical solutions as follows:
a method for correcting wind velocity measured by a single-station remote sensing device, including the specific steps of:
S1, acquiring wind field data through a data information acquisition device, and obtaining radial wind velocity information corresponding to a current acquisition point through a data processing module;
S2, performing inversion using a classic wind velocity reconstruction algorithm based on an assumption of a uniform wind field, to obtain a three-dimensional wind velocity vector of the acquisition point;
S3, establishing an error model; and
S4, performing, based on an error factor β computed by the error model, data correction on the three-dimensional wind velocity vector of the acquisition point obtained by inversion in S2.

As a further preferred embodiment of the present disclosure, the establishing an error model includes:
S31, obtaining geographic data information of the acquisition point;
S32, setting an initial condition for simulation and a system equation, and constructing a wind velocity flow field model;
S33, when the wind velocity flow field model simulates a radial velocity along a viewing direction, simulating a wind field by a wind field simulation model combining a range weighting function, to obtain simulation results, the simulation results including: simulated radial wind velocity and a simulated true wind vector;
S34, computing a reconstructed simulated three-dimensional wind vector based on the simulated radial wind velocity using the classic wind velocity reconstruction algorithm; and
S35, comparing the simulated true wind vector with the reconstructed simulated three-dimensional wind vector, and establishing the error model.

As a further preferred embodiment of the present disclosure, the initial condition for simulation is set as the three-dimensional wind velocity vector of the acquisition point obtained by inversion in S2, and
the wind velocity flow field model is a variational data assimilation simulation model.

As a further preferred embodiment of the present disclosure, the variational data assimilation simulation model is four-dimensional variational data assimilation, three-dimensional variational data assimilation, or incremental variational data assimilation.

As a further preferred embodiment of the present disclosure, the error model is:
$β = \frac{stimulated true wind vector}{reconstructed simulated wind vector} ,$
wherein β is the error factor.

As a further preferred embodiment of the present disclosure,
the data correction is completed by obtaining a corrected wind vector based on
*corrected wind vector*=*β*×*measured wind vector* .

A system for correcting wind velocity measured by a single-station remote sensing device, including a data information acquisition device, a data information processing module, a geographic information database module, an error analysis model, a data correction module, and a data output module, wherein
the data information acquisition device is configured for acquiring returned signals after transmission, sampling the wind velocity at the acquisition point in the wind field, and sending the acquired data to the data information processing module, the data information acquisition device including a remote sensing measurement device;
the data information processing module is configured for obtaining radial wind velocity at the acquisition point by inversion, obtaining a measured wind vector using a wind field reconstruction algorithm, and sending the measured wind vector and the radial wind velocity to the error analysis model;
the error analysis model is configured for retrieving relevant geographic information of the wind field in the geographic information database module, performing error analysis combining the retrieved information, the measured wind vector, and the radial wind velocity, to estimate and quantify an error, and sending a result to the data correction module;
the data correction module is configured for receiving the measured wind vector and the radial wind velocity sent by the data information processing module, performing analysis by comparing the measured wind vector and the radial wind velocity with the error estimation and quantification obtained by the error analysis model, correcting the measured wind vector, and sending a corrected measured wind vector to the data output module; and
the data output module is configured for outputting the corrected measured wind vector.

As a further preferred embodiment of the present disclosure, the data information acquisition device is provided as pulsed lidar, continuous wave lidar, acoustic radar, or electromagnetic wave radar.

As a further preferred embodiment of the present disclosure, a nacelle-mounted device, a floating device, or a vehicle-mounted device is used for the data information acquisition device and the data information processing module.

As a further preferred embodiment of the present disclosure, the error analysis model, the data correction module, and the data output module are installed on a master device of the remote sensing device, on an external device, or on a cloud platform.

Compared with prior art, a wind field correction method and system applied to a single-station remote sensing device according to the present disclosure have beneficial effects as follows:
1, the present disclosure processes measured data using variational data assimilation, which may significantly improve the speed and precision of a wind field simulating model, and accurately estimate a measurement error;
2, the present disclosure optimizes a wind velocity reconstruction error introduced by the uniformity assumption, and improves the precision of the measured wind velocity;
3, the present disclosure puts data measured in real time by the device into wind field simulation in the process of model establishment, and uses actual wind field data as a boundary condition for the simulation, effectively improving the accuracy of a wind velocity correction result; and
4, the present disclosure further improves the accuracy of the correction method by including a range weighting function in the process of model establishment.

### BRIEF DESCRIPTION OF DRAWINGS

FIG. 1 is a schematic diagram of measurement by a ground-based single-station vertical wind profile remote sensing probe at four different measurement heights;
FIG. 2 is a schematic diagram of wind field reconstruction by ground-based single-station vertical wind profile pulsed lidar in a simple terrain;
FIG. 3 is a schematic diagram of wind field reconstruction by ground-based single-station vertical wind profile pulsed lidar in a complex terrain;
FIG. 4 is a flowchart of data processing of a wind field correction method for a single-station remote sensing device according to the present disclosure;
FIG. 5 is a first embodiment of a wind field correction system for a single-station remote sensing device according to the present disclosure;
FIG. 6 is a second embodiment of a wind field correction system for a single-station remote sensing device according to the present disclosure;
FIG. 7 is a third embodiment of a wind field correction system for a single-station remote sensing device according to the present disclosure.

The meanings of the reference numerals in the figures are as follows: 1. remote sensing probe, 2. signal transmission along viewing direction, 3. computational meshes for simulating wind field in complex terrain, 4. simple terrain, 5. actual measurement point, 6. cylindrical probe volume, 7. true wind field, 8. radial velocity along viewing direction, 9. original measured wind vector.

### DETAILED DESCRIPTION OF THE EMBODIMENTS

The present disclosure is elaborated below with reference to the drawings and embodiments.

The present disclosure provides a high-precision correction method, which may run on low-end hardware, or be directly installed and run on hardware of a measurement device, thereby enabling real-time measurement result correction without introducing additional complexity for a user, reducing cost.

The present disclosure is particularly suitable for dealing with complex system problems where accurate boundary conditions are unable to be obtained, such as simulating wind field in a complex terrain.

Unlike a conventional method of directly sampling simulation results at a selected measurement range, the present disclosure employs a method of performing sampling and weighting summation on all simulation results from a RSD installation location to a maximum measurement range along a viewing direction, which is more faithful to a physical process of measurement by an RSD in real life, because it takes into account physical characteristics related to an atmospheric probe volume.

Embodiment 1: a system includes a data information acquisition device, a data information processing module, a geographic information database module, an error analysis model, a data correction module, and a data output module.

The data information acquisition device is configured for acquiring returned signals after transmission, sampling the wind velocity at the acquisition point in the wind field, and sending the acquired data to the data information processing module, the data information acquisition device including a remote sensing measurement device.

The data information processing module is configured for obtaining radial wind velocity at the acquisition point by inversion, obtaining a measured wind vector using a wind field reconstruction algorithm, and sending the measured wind vector and the radial wind velocity to the error analysis model.

The error analysis model is configured for retrieving relevant geographic information of the wind field in the geographic information database module, performing error analysis combining the retrieved information, the measured wind vector, and the radial wind velocity, to estimate and quantify an error, and sending a result to the data correction module.

The data correction module is configured for receiving the measured wind vector and the radial wind velocity sent by the data information processing module, performing analysis by comparing the measured wind vector and the radial wind velocity with the error estimation and quantification obtained by the error analysis model, correcting the measured wind vector, and sending a corrected measured wind vector to the data output module.

The data output module is configured for outputting the corrected measured wind vector.

Embodiment 2: S1. Acquiring wind field data through a data information acquisition device, and obtaining radial wind velocity information corresponding to a current acquisition point through a data processing module

A single-station remote sensing device (RSD) transmits a plurality of beams of signals into space, where the signals interact with aerosol particles in the atmosphere. A portion of a backscattered signal is received by a receiving system of the remote sensing device and processed, which allows to obtain the radial wind velocity information.

S2, Performing inversion using a classic wind velocity reconstruction algorithm based on an assumption of a uniform wind field, to obtain a three-dimensional wind velocity vector of the acquisition point
Inversion may be performed based on the assumption of a uniform wind field using a classic wind velocity reconstruction algorithm as shown in the following equation, using a plurality of measured radial wind velocities *V_{Los}* and corresponding projection angles *θ* and *ϕ*, to obtain the three-dimensional wind velocity vector (*u*, *v*, *w*):
$\left[\begin{matrix}{V}_{Los 1} \\ {V}_{Los 2} \\ {V}_{Los 3} \\ … \\ {V}_{Los 4}\end{matrix}\right] = \left[\begin{matrix}sin {θ}_{1} cos {ϕ}_{1} & cos {θ}_{1} cos {ϕ}_{1} & sin {ϕ}_{1} \\ sin {θ}_{2} cos {ϕ}_{2} & cos {θ}_{2} cos {ϕ}_{2} & sin {ϕ}_{1} \\ sin {θ}_{3} cos {ϕ}_{3} & cos {θ}_{3} cos {ϕ}_{3} & sin {ϕ}_{1} \\ … & … & … \\ sin {θ}_{n} cos {ϕ}_{n} & cos {θ}_{n} cos {ϕ}_{n} & sin {ϕ}_{n}\end{matrix}\right] ∗ \left[\begin{matrix}u \\ ν \\ w\end{matrix}\right] .$

S3, Establishing an error model
When the assumption of wind field uniformity is not met in a complex terrain, an error model has to be established to reasonably correct the wind velocity obtained by inversion.

S3l, Obtaining geographic data information of the acquisition point, wherein the geographic data information includes an inlet velocity, a ground roughness length, atmospheric stability, eddy viscosity, or any other parameters used by the physical model.

S32, Setting an initial condition for simulation and a system equation, and constructing a wind velocity flow field model
The three-dimensional wind velocity vector of the acquisition point obtained by inversion in S2 is used as the initial condition.

The wind velocity flow field model is a variational data assimilation simulation (VDA) model.

The present disclosure employs VDA for wind flow modeling. Data assimilation may be simplified into an optimization problem, that is, finding the optimal solution of an objective function meeting a constraint. The objective function may reasonably quantify the difference between simulated data and actual observed data, while a system constraint equation derives from fundamental physics equations describing laws governing operation of an objective system.

There are two main types of applications in data assimilation, both of which may be used in the present disclosure and are encompassed by the same form:
state estimation, including directly adjusting a result of the physical model, to make a physical field consistent with an available observation, wherein in this application, a state variable x being optimized may include wind velocity, pressure, temperature, or any other physical fields computed by the model; and
parameter estimation, including calibrating a parameter of the physical model, so that the model produces a result closer to the available observation, wherein in this application, a state variable x being optimized may include reference inlet velocity, the ground roughness length, atmospheric stability, eddy viscosity, or any other parameters used by the physical model.

To assimilate an individual instantaneously available measurement value, the most widely used VDA is called three-dimensional variational assimilation (3D-Var), wherein the objective function is typically expressed as:
$J \left(x\right) = \frac{1}{2} {\left(x-{x}_{b}\right)}^{T} {B}^{- 1} \left(x-{x}_{b}\right) + \frac{1}{2} {\left({y}^{meas}-H\left(x\right)\right)}^{T} {R}^{- 1} \left({y}^{meas}-H\left(x\right)\right) ,$
wherein:
x is an updated system state, that is, a current estimated value of the wind field;
*J*(*x*) is the objective function (cost function) of the system;
T is a notation of transpose of a matrix;
*x_{b}* is a background state of the system, that is, an initial state of the wind field;
*B* is an error covariance matrix of the background state of the system, that is, a pure physical model uncertainty estimation. For its inverse matrix, a region with lower model uncertainty may be assigned a greater weight in the objective function;
*y^{meas}* is a set of available observations, that is, the available measurement values obtained from a single-station RSD;
*H*(*x*) is a set of simulated observations, wherein the *H* operator maps the system state to an observation space, that is, for the single-station RSD, the operator *H* represents the process of reconstructing the wind field; and
*R* is an error covariance matrix of the observations, that is, an uncertainty estimation of the measurement values from the single-station RSD. For its inverse matrix, an observation with lower uncertainty is assigned a greater weight in the objective function; single-station RSD measurements. Regarding its inverse matrix, observations with lower uncertainty are assigned greater weight in the objective function.

The term (*x* - *x_{b}*)*^{T} B*⁻¹(*x* - *x_{b}*) is an augmented weighted least squares deviation describing the system state of the physical model, while the term (*y^{meas}* - *H*(*x*))*^{T} R*⁻¹(*y^{meas}* - *H*(*x*)) describes an augmented weighted least squares deviation between available reconstruction observed data. Minimizing the objective function *J*(*x*) is essentially selecting a system state that minimizes the error between simulated data and actual measured data.

In the process of setting the initial condition for simulation and system simulation, the present disclosure directly puts data measured in real time by the device into wind field simulation, and uses actual wind field data as a boundary condition for the simulation, effectively improving the accuracy of a wind velocity correction result.

The method may reduce the need for computing power by using a simple wind flow model and a relatively small computational domain (since the boundary condition may be optimized), while maintaining a sufficiently high level of precision by using an adjusted empirical parameter.

A plurality of measured data values in a specific time sequence within a given time window may also be considered. In this case, time is treated as a fourth dimension, and a method used is called four-dimensional variational assimilation (4D-Var), whose objective function becomes:
$J \left(x\right) = \frac{1}{2} {\left(x-{x}_{b}\right)}^{T} {B}^{- 1} \left(x-{x}_{b}\right) + \frac{1}{2} {\sum }_{i = 0}^{{N}_{obs}} {\left({y}_{i}^{meas}-{H}_{i}\left({x}_{i}\right)\right)}^{T} {R}_{i}^{- 1} \left({y}_{i}^{meas}-{H}_{i}\left({x}_{i}\right)\right) ,$
wherein *N_{obs}* is a number of observations. Ultimately, the present disclosure is not strictly limited to the use of 3D-Var and 4D-Var, and any other VDA may be used.

When minimizing the objective function *J*(*x*)*,* basic physical properties of a flow field have to be followed, that is, a reasonable constraint equation of the flow field physical system has to be constructed. For example, a constraint of conservation of mass may be expressed as ∇ ·*U* = 0, wherein *̅U̅*̅ is wind velocity. However, the present disclosure is not limited to the constraint of conservation of mass, and may use any other physics equation as a constraint. Generally, the physical constraint equation in 3D-Var is expressed as:
$M \left(x\right) = c ,$
and in 4D-Var, the physical constraint drives the evolution of the system state over time, so the constraint equation is expressed as:
${M}_{i} \left({x}_{i}\right) = {x}_{i + 1} .$

In the remainder of the description of the present disclosure, the constraint equation is expressed in 3D-Var form by default.

To solve the problem of minimizing the objective function *J*(*x*) with a constraint, a Lagrange multiplier should be employed, wherein a Lagrangian function is defined as:
$L \left(x, λ\right) = J \left(x\right) + λ \left(M\left(x\right)-c\right) ,$
the minimization of the objective function under the constraint is transformed into the problem of selecting appropriate x and λ to minimize the function *L*(*x, λ*)*,* that is, solving the equation ∇*_{U̅,λ}L =* 0.

The present disclosure may also use pre-existing experimental data to appropriately adjust the covariance matrixes *B* and *R*, thereby making it a semi-empirical method.

S33, When the wind velocity flow field model simulates a radial velocity along a viewing direction, simulating a wind field by a wind field simulation model combining a range weighting function, obtained results being used for result estimation
When simulating a radial velocity along a viewing direction using the wind velocity flow field model, adding a specific range weighting function (RWF) for the probe volume of remote sensing probe further improves the accuracy of the correction method.

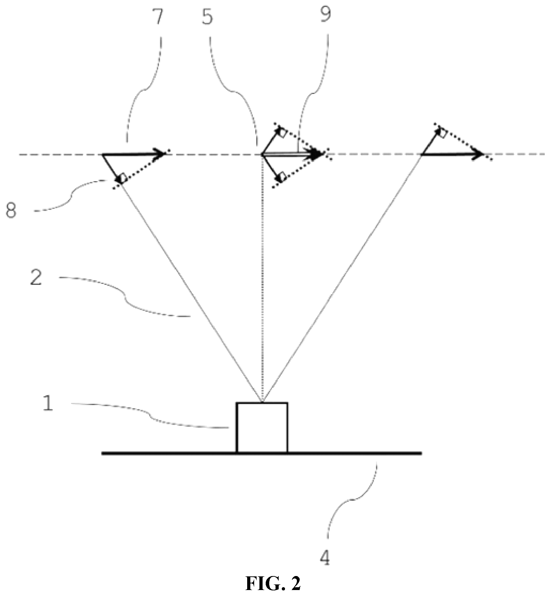

In a probe model of remote sensing probe performing measurement at a given distance, the RWF gives a weight of contribution of a simulated radial velocity at each location along the viewing direction to a final required simulated radial velocity. The RWF is typically a Gaussian distribution along the viewing direction centered on a point at a required measurement range. As shown in FIG. 2, the location of a cylindrical probe volume along the viewing direction is related to a selected measurement height, and the length of the cylindrical probe is typically equal to a full width at half maximum (FWHM) of the RWF.

As shown in the following equation, the RWF for a specific RSD will give the corresponding weight at each sampling result point:
$\hat{u} \left(R\right) = {\sum }_{i = 1}^{{N}_{p}} {RWF}_{R} \left(i\right) ⋅ u \left(i\right) ⋅ Δ r ,$
wherein: *û*(*R*) is the simulated radial velocity at the measurement range *R* ;
*N_{P}* is the number of sampling points;
*RWF_{R}*(*i*) is the weight at each sampling point *i,* wherein the simulated velocity at the measurement range *R* is computed by weighting through the specific RWF of the RSD;
*u*(*i*) is the simulated velocity at the sampling point *i* ; and
Δ*r* is a viewing direction range relative to the sampling point *i .*

When the wind velocity flow field model simulates a radial velocity along a viewing direction, a wind field is simulated by a wind field simulation model combining a range weighting function, to obtain simulation results.

The simulation results are:
1, simulated radial wind velocity; and
2, a simulated true wind vector.

S34, Computing a reconstructed simulated three-dimensional wind vector based on the simulated radial wind velocity using the classic wind velocity reconstruction algorithm
A reconstructed simulated three-dimensional wind vector is computed using the radial wind velocity information obtained by radial wind velocity simulation using the classic wind velocity reconstruction algorithm.

S35, Comparing the simulated true wind vector with the reconstructed simulated three-dimensional wind vector, and establishing the error model
Then, a reasonable error model is established by comparing the wind vector reconstructed using the simulated radial wind velocity with the simulated true wind vector.

The error model is:
$β = \frac{simulated true wind vector}{reconstructed simulated wind vector} ,$
wherein β is the error factor.

S4, Performing, based on an error factor β computed by the error model, data correction on the three-dimensional wind velocity vector of the acquisition point obtained by inversion in S2
Finally, based on
*corrected wind vector*=*β*×*measured wind vector* ,
the wind vector initially measured by the device is corrected based on the estimated error model.

Embodiment 3: the correction method will be described in ground-based vertical profile single-station pulsed wind lidar, wherein the single-station pulsed wind lidar is used to measure wind velocity in an atmospheric boundary layer.

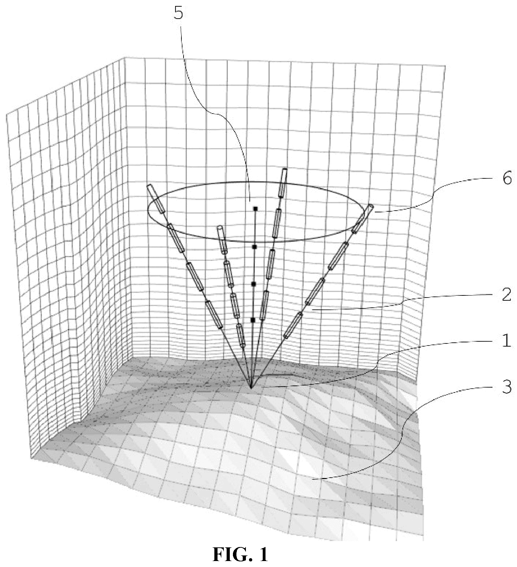

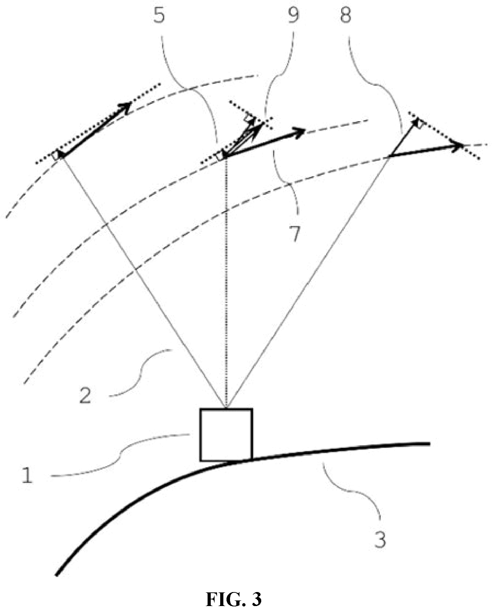

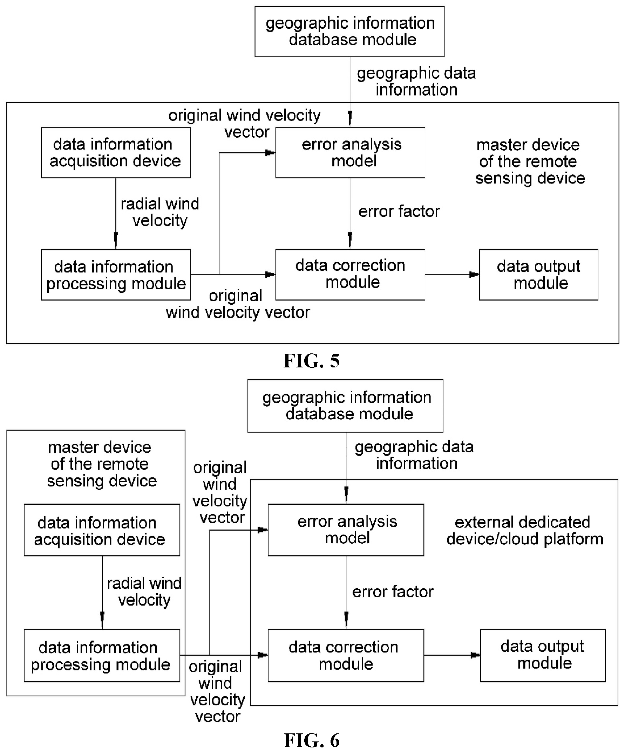

As shown in FIG. 1, the single-station pulsed wind lidar transmits four laser beams along different viewing directions, the beams being respectively at an angle of approximately 30 degrees to a vertical axis, and having azimuth angles spaced at 90 degrees pointing respectively to the four main directions, i.e., east, south, west, and north. The data processing module in FIG. 5 solves for an optimal wind vector minimizing an error function between the projection of the wind vector along a viewing direction and the measured radial velocity along the viewing direction by linear regression through a wind field reconstruction algorithm, such as the wind field reconstruction algorithm included in FIG. 2 and FIG. 3.

The error function may be expressed as: $f \left(\vec{U}\right) = \frac{1}{2} {\sum }_{i = 1}^{4} {\left(U⋅\vec{{n}_{i}}-{u}_{i}\right)}^{2}$,
wherein *̅U̅*̅ is a reconstructed wind vector, *i* is a viewing direction serial number, *̅n̅ᵢ̅*̅ is a unit vector along the viewing direction, *uᵢ* is the radial velocity along a viewing direction. A wind vector measurement result may be obtained and stored by wind field reconstruction.

To correct a wind field measurement result under a nonuniform wind field, in embodiments of the present disclosure, an additional single-chip microcontroller is embedded into the lidar. The microcontroller is dedicated to running the error analysis model in FIG. 5. The error analysis model exchanges data with the lidar via local TCP communication. The configuration enables real-time correction of the wind field measurement result.

The error model first discretizes a simulated wind field region into Cartesian meshes using a flow field model. Terrain elevation data information is loaded at each horizontal grid point through coordinates of a lidar installation location and an embedded terrain database. Vertical discretization is performed on a range from the ground to a preset maximum elevation using the information, thereby constructing a three-dimensional Cartesian grid coordinate system, as shown in FIG. 2.

Then, an uncorrected wind measurement result is put into the wind velocity flow field model as an initial condition. For the single-station pulsed wind lidar, it is 10-minute average horizontal wind velocity and horizontal wind direction data. After inputting the aforementioned wind field measurement data, the data are put into a three-dimensional variational assimilation model to estimate the state of the wind field. A final optimized state variable is the output simulated true wind vector *̅U̅*̅.

A background wind vector *U_{b}* of the three-dimensional variational assimilation model is computed by extrapolating uncorrected horizontal average wind velocities corresponding to different heights at the lidar installation location. First, a wind profile power law is fitted to the horizontal average wind velocities corresponding to different heights; and second, horizontal average wind velocities at respective cells in the grid are extrapolated using the fitted power law. Vertical wind velocities at respective locations are approximately zero.

The following assumptions enable the error covariance matrix B of the background state to be simplified to a diagonal matrix:
1, model errors in the wind vector along x, y, and z directions are uncorrelated.
2, inter-error spatial correlation is ignored, that is, the wind vectors at repsective grid points are independent of each other.

The size of an error covariance in the simplified diagonal matrix B is related to locations of a grid point and the lidar relative to each other. The closer the point is to the lidar installation location, the smaller the covariance; and the farther away the point is to the lidar installation location, the greater the error covariance. As shown in the following equation as an example, there may be a specific numerical relationship between an element of the diagonal matrix and the distance between a grid point and the lidar installation location:
${B}_{ij} = α {\left({\left(x-{x}_{lidar}\right)}^{2}+{\left(y-{y}_{lidar}\right)}^{2}\right)}^{k} ,$
wherein: *i* is an index of the state variable, and represents a grid cell and a velocity component;
(*x*, *y*) is the horizontal coordinate of the cell;
(*x_{lidar}*, *y_{lidar}*) is the horizontal coordinate of the lidar; and
*k* and *α* are adjustable empirical parameters.

Since B is a diagonal matrix, an augmented weighted least squares model error term in the equation (*U̅ - U̅_{b}*)*^{T} B*^{*-*1}(*U̅ - U̅_{b}*) may be rewritten as *B*^{*-*1}(*̅U̅*̅ - *U̅_{b}*)² *.* Furthermore, because the background wind vector *U̅_{b}* at the location of the lidar is equal to the measured uncorrected horizontal average wind velocity value, it means that the difference between the simulated true wind vector and the background wind vector at the lidar installation location has quantified the deviation of the simulated true wind vector from the measured observed data. Therefore, the term (*y^{meas} - H*(*x*))*^{T} R*^{*-*1}(*y^{meas} - H*(*x*)) in the equation $J \left(x\right) = \frac{1}{2} {\left(x-{x}_{b}\right)}^{T} {B}^{- 1} \left(x-{x}_{b}\right) + \frac{1}{2} {\left({y}^{meas}-H\left(x\right)\right)}^{T} {R}^{- 1} \left({y}^{meas}-H\left(x\right)\right)$ may be ignored.

Finally, the physical constraint of conservation of mass is introduced in this embodiment, and the Lagrangian function in *L*(*x, λ*) *= J*(*x*) *+ λ*(*M*(*x*) *-c*) is simplified to: $L \left(\vec{U}, λ\right) = \frac{1}{2} {B}^{- 1} {\left(\vec{U}-\vec{{U}_{b}}\right)}^{2} + λ \left(∇⋅\vec{U}\right)$.

The problem of optimizing the cost function is thus transformed into solving ∇*U̅_{,λ}L =* 0*.*

The equation is expanded as:
$\left\{\begin{matrix}\frac{\partial }{\partial λ} L = ∇ ⋅ \vec{U} = 0 \\ \frac{\partial }{\partial {U}_{x}} L = \frac{{U}_{x} - {U}_{{x}_{b}}}{α {\left({\left(x-{x}_{lidar}\right)}^{2}+{\left(y-{y}_{lidar}\right)}^{2}\right)}^{k}} - \frac{\partial λ}{\partial x} = 0 \\ \frac{\partial }{\partial {U}_{y}} L = \frac{{U}_{y} - {U}_{{y}_{b}}}{α {\left({\left(x-{x}_{lidar}\right)}^{2}+{\left(y-{y}_{lidar}\right)}^{2}\right)}^{k}} - \frac{\partial λ}{\partial y} = 0 \\ \frac{\partial }{\partial {U}_{z}} L = \frac{{U}_{z} - {U}_{{z}_{b}}}{α {\left({\left(x-{x}_{lidar}\right)}^{2}+{\left(y-{y}_{lidar}\right)}^{2}\right)}^{k}} - \frac{\partial λ}{\partial z} = 0\end{matrix}\right. ,$
, wherein the last three equations may be integrated into a vector form:
   $\left\{\begin{matrix}∇ ⋅ \vec{U} = 0 \\ {B}^{- 1} \left(\vec{U}-\vec{{U}_{b}}\right) = ∇ λ\end{matrix}\right.$
, which is a set of four simultaneous system equations involving four unknown physical quantities *Uₓ, U_{y}, U_{z}, λ.* However, unlike a more complex computation fluid dynamics CFD flow model, it does not include any nonlinear terms, such as a thermal convection term etc. Therefore, a process of solving the set is not difficult.

Using the second equation, we may express *̅U̅*̅ as:
$\vec{U} = \vec{{U}_{b}} + B ∇ λ ,$
substituting this expression back into $\left\{\begin{matrix}∇ ⋅ \vec{U} = 0 \\ {B}^{- 1} \left(\vec{U}-\vec{{U}_{b}}\right) = ∇ λ\end{matrix}\right.$, we obtain the only equation requiring numerical solution in this embodiment of the present disclosure: ∇*·B*∇*λ* =-∇*·U̅_{b},*
wherein ∇·*B*∇λ is an anisotropic diffusion term of the Lagrange multiplier, wherein B is a designated diffusion coefficient. Using standard finite volume method (FVM) technology enables to solve for the value of *λ* in each cell in a region, and then the value is put into ∇·*B*∇*λ* = -∇·*U̅_{b}* to obtain the final output *U̅.*

In addition to wind field simulation using aforementioned VDA, in this embodiment, the influence of the range weighting function (RWF) of the lidar is also considered when computing the simulated radial velocity.

The lidar transmits laser pulse signals, with signal intensity assuming the form of a Gaussian envelope over time, wherein in this embodiment, a pulse duration is a full width at half maximum (FWHM) *τ* =200ns of the Gaussian envelope curve. These pulses travel along a viewing direction at the speed of light c, and therefore may also be described as Gaussian intensity distributions in space. In this embodiment, the pulse signals propagate a distance of approximately 30m within the duration *τ̅*.

In addition, when a lidar optical sensor receives a backscattered echo signal from space, a certain sampling time window is required for accumulation. The accumulation time is denoted as *τₘ*, and a range gate is a distance the signal propagates within the duration *τₘ* in space.

The sampling accumulation time *τₘ* is generally an optimal trade-off value between a total amount of light received and a size of the probe volume, and for this embodiment, *τₘ* = 200 ns.

Based on the above information, the range weighting function (RWF) at a preset measurement range may be computed. The range weighting function (RWF) of pulsed lidar may be expressed as:
$RWF \left(R, r\right) = \frac{1}{{cτ}_{m}} \left[erf\left(\frac{4 \sqrt{ln 2}}{cτ}\left(r-R\right)+\frac{\sqrt{ln 2} {τ}_{m}}{τ}\right)-erf\left(\frac{4 \sqrt{ln 2}}{cτ}\left(r-R\right)-\frac{\sqrt{ln 2} {τ}_{m}}{τ}\right)\right] ,$
wherein: c is the speed of light,
*R* is the preset measurement range along the viewing direction, and
*r* is a relative distance from a preset measurement location to the location of a point for computing a range weight along the viewing direction.

In this embodiment, a sampling interval along a viewing direction is set as 1m. The simulated radial velocity is computed based on $\hat{u} \left(R\right) = {\sum }_{i = 1}^{{N}_{p}} {RWF}_{R} \left(i\right) ⋅ u \left(i\right) ⋅ Δ r$ using information on simulated velocities and the weighting function at the sampling points. Then, a reconstructed simulated wind vector is output using the wind field reconstruction algorithm described by $f \left(\vec{U}\right) = \frac{1}{2} {\sum }_{i = 1}^{4} {\left(U⋅\vec{{n}_{i}}-{u}_{i}\right)}^{2}$.

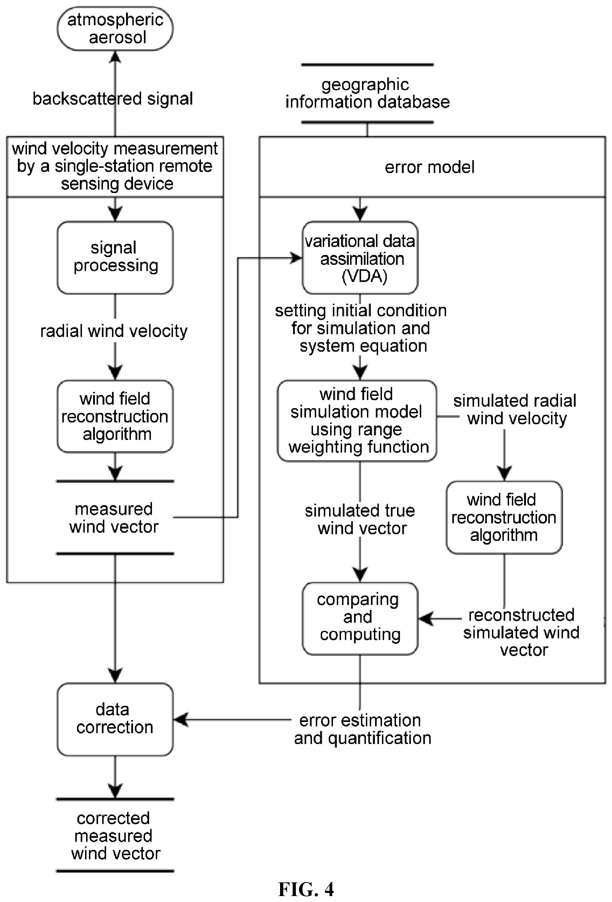

Finally, as shown in FIG. 4, the error between the simulated true wind vector and the reconstructed simulated wind vector is estimated and quantified.

In this embodiment, the error factor is expressed as the ratio between the two: $β = \frac{simulated true wind vector}{reconstructed simulated wind vector}$. Data correction may be easily performed on the wind vector measured by the RSD using the error factor.

Embodiment 4: the data information acquisition device of the present disclosure may employ not only pulsed lidar, but also other types of remote sensing measurement devices, including but not limited to continuous wave lidar, acoustic radar, and electromagnetic wave radar.

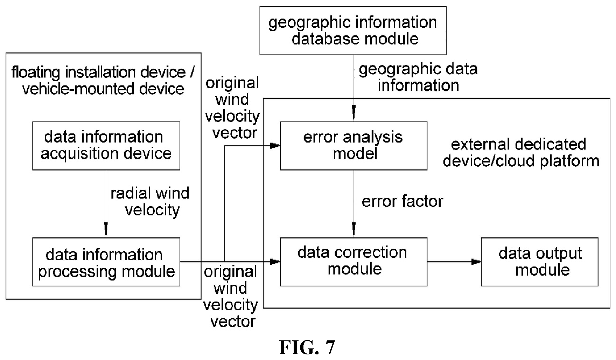

Embodiment 5: the data information acquisition device of the present disclosure may be installed as, but is not limited to, a nacelle-mounted device, a floating device, as well as a vehicle-mounted device, as shown in FIGs. 5-7.

Embodiment 6: computation of the error model may also be performed in other ways, including but not limited to running directly on a master device of the remote sensing device, running on an external dedicated device, as well as running on a cloud platform, etc., as shown in FIGs. 5-7

Other types of variational data assimilation, including but not limited to four-dimensional variational data assimilation (4D-Var) and incremental variational data assimilation (Incr-Var), may be used.

The VDA may perform optimization for other variables, including but not limited to state variables such as pressure and temperature, as well as parameters such as boundary inlet velocity, the ground roughness length, atmospheric stability, eddy viscosity, etc.

The observed data may include variables other than wind velocity, including but not limited to turbulence intensity and a turbulence energy dissipation rate.

The objective function may be expressed in different ways, and rather than being limited to the augmented weighted least squares error method in the embodiments, use different estimates of the difference between simulated data and observed data, including but not limited to weighted least squares error, least squares error, absolute error, relative error, and maximum error.

The objective function may include different adjustable empirical parameters, including but not limited to atmospheric stability and ground coverage, or may not use any empirical parameters.

A physical constraint other than conservation of mass, including but not limited to conservation of momentum, a thermodynamic constraint, a boundary constraint, etc, may be used.

Methods other than the Lagrange multiplier, including but not limited to gradient descent, stochastic gradient descent, evolution, heuristics, a metaheuristic algorithm, etc., may also be used to minimize the objective function.

Finally, when computing the range weighting function for the simulated radial velocity along a viewing direction, it is not limited to segmentation sampling along the viewing direction.

Embodiment 7: the present disclosure may also consider introducing a factor of a cross-sectional area of a signal transmitted by the remote sensing probe along a viewing direction, to sample measurement results of different probe volumes along the viewing direction, and replace Δ*r* in $\hat{u} \left(R\right) = {\sum }_{i = 1}^{{N}_{p}} {RWF}_{R} \left(i\right) ⋅ u \left(i\right) ⋅ Δ r$ with Δ*V* (the probe volume corresponding to the original sampling point). Alternatively, the range weighting function (RWF) associated with the single-station remote sensing probe may not be used.

The foregoing shows and describes a basic principle, main features, and advantages of the present disclosure. Those skilled in the art should understand that the above embodiments do not limit the present disclosure in any way. Any technical solutions obtained by equivalent substitutions or equivalent transformations shall fall within the protection scope of the present disclosure.

## Claims

1. A method for correcting wind velocity measured by a single-station remote sensing device, **characterized in** the method comprising the specific steps of:
S1, acquiring wind field data through a data information acquisition device, and obtaining radial wind velocity information corresponding to a current acquisition point through a data processing module;
S2, performing inversion using a classic wind velocity reconstruction algorithm based on an assumption of a uniform wind field, to obtain a three-dimensional wind velocity vector of the acquisition point;
S3, establishing an error model,
the establishing an error model comprising:
S31, obtaining geographic data information of the acquisition point;
S32, setting an initial condition for simulation and a system equation, and constructing a wind velocity flow field model,
the initial condition for simulation being set as the three-dimensional wind velocity vector of the acquisition point obtained by inversion in S2,
the wind velocity flow field model being a variational data assimilation simulation model;
S33, when the wind velocity flow field model simulates a radial velocity along a viewing direction, simulating a wind field by a wind field simulation model combining a range weighting function, to obtain simulation results, the simulation results comprising: simulated radial wind velocity and a simulated true wind vector;
S34, computing a reconstructed simulated three-dimensional wind vector based on the simulated radial wind velocity using the classic wind velocity reconstruction algorithm; and
S35, comparing the simulated true wind vector with the reconstructed simulated three-dimensional wind vector, and establishing the error model; and
S4, performing, based on an error factor β computed by the error model, data correction on the three-dimensional wind velocity vector of the acquisition point obtained by inversion in S2.

2. The method for correcting wind velocity measured by a single-station remote sensing device according to claim 1, wherein the variational data assimilation simulation model is four-dimensional variational data assimilation, three-dimensional variational data assimilation, or incremental variational data assimilation.

3. The method for correcting wind velocity measured by a single-station remote sensing device according to claim 1, wherein the error model is: $β = \frac{simulated true wind vector}{reconstructed simulated wind vector} ,$ wherein β is the error factor.

4. The method for correcting wind velocity measured by a single-station remote sensing device according to claim 1, wherein the data correction is completed by obtaining a corrected wind vector based on$corrected wind vector = β \times measured wind vector .$

5. A correction system using the method for correcting wind velocity measured by a single-station remote sensing device according to any one of claims 1 to 4, the system comprising the data information acquisition device, a data information processing module, a geographic information database module, an error analysis model, a data correction module, and a data output module, wherein
the data information acquisition device is configured for acquiring returned signals after transmission, sampling the wind velocity at the acquisition point in the wind field, and sending the acquired data to the data information processing module, the data information acquisition device comprising a remote sensing measurement device;
the data information processing module is configured for obtaining radial wind velocity at the acquisition point by inversion, obtaining a measured wind vector using a wind field reconstruction algorithm, and sending the measured wind vector and the radial wind velocity to the error analysis model;
the error analysis model is configured for retrieving relevant geographic information of the wind field in the geographic information database module, performing error analysis combining the retrieved information, the measured wind vector, and the radial wind velocity, to estimate and quantify an error, and sending a result to the data correction module;
the data correction module is configured for receiving the measured wind vector and the radial wind velocity sent by the data information processing module, performing analysis by comparing the measured wind vector and the radial wind velocity with the error estimation and quantification obtained by the error analysis model, correcting the measured wind vector, and sending a corrected measured wind vector to the data output module; and
the data output module is configured for outputting the corrected measured wind vector.

6. The correction system according to claim 5, wherein the data information acquisition device is provided as pulsed lidar, continuous wave lidar, acoustic radar, or electromagnetic wave radar.

7. The correction system according to claim 5, wherein a nacelle-mounted device, a floating device, or a vehicle-mounted device is used for the data information acquisition device and the data information processing module.

8. The correction system according to claim 5, wherein the error analysis model, the data correction module, and the data output module are installed on a master device of the remote sensing device, on an external device, or on a cloud platform.
